# EUROPEAN PATENT SPECIFICATION

(11) **EP 2 537 234 B1**
(45) Date of publication and mention of the grant of the patent: **21.03.2018**
(21) Application number: 11718296.4
(22) Date of filing: 02.05.2011
(51) Int. Cl.: H02K 1/30, H02K 49/04, H02K 9/06

(54) **A ROTOR FOR A PERMANENT MAGNET RETARDER**
ROTOR FÜR EINEN PERMANENTMAGNETVERZÖGERER
ROTOR POUR RALENTISSEUR À AIMANT PERMANENT

(30) Priority: 03.05.2010 DE 102010019317
(43) Date of publication of application: 26.12.2012
(73) Proprietor: Voith Patent GmbH, 89522 Heidenheim (DE)
(72) Inventor: NOGUCHI, Yasutaka, Osaka-shi Osaka 5410041 (JP); NOGAMI, Hiroshi, Osaka-shi Osaka 5410041 (JP); YAMAGUCHI, Hiroyaki, Osaka-shi Osaka 5410041 (JP); ADAMS, Werner, 74564 Crailsheim (DE)
(74) Representative: Dr. Weitzel & Partner
(86) International application number: PCT/EP2011/002165
(87) International publication number: WO 2011/137993

(56) References cited:
- EP-A2- 1 124 311
- GB-A- 321 663

## Description

The invention relates to a rotor for a permanent magnet retarder, comprising several magnets distributed over the circumference of the stator or the rotor. The invention further relates to a permanent magnet retarder with such a rotor.

Permanent magnet retarders are generally known from the state of the art. Reference is hereby made by way of example to the Japanese Patent Abstract JP 2005-176418 which describes such a permanent magnet retarder in principle. The configuration of such a permanent magnet retarder consists of a stator and a rotor which rotates around the stator. One of the two partners, which is frequently the stator, comprises several permanent magnets which are distributed over the circumference and which can be short-circuited either within the stator by means of suitable switching elements or are switched in another position of the switching elements in such a way that their magnetic field reaches into the region of the rotor out of the stator. The rotor, or at least one functional element of the rotor, such as a ring element for example which revolves around the said stator is made at least partly of a soft-magnetic or magnetizable material such as an iron material, so that the magnetic fields penetrating the area of the rotor induce respective opposing magnetic fields and thus brake the rotor relative to the stator.

This functionality is generally known and has been realised for example by the permanent magnet retarder described in the aforementioned specification. There is one special problem in that the rotor revolves both in the braked and unbraked state of the permanent magnet retarder. This occurs at high speeds of the driveshaft or a universal shaft, in the region of which the permanent magnet retarder is frequently arranged, usually with comparatively high speeds of up to a few thousand rotations per minute. At such high speeds the rotor produces a comparatively high air resistance which in the unbraked state leads to undesirable power losses.

Further prior art is shown in EP 1 124 311 A2 and GB 321 663 A.

It is therefore the object of the present invention to provide a rotor for a permanent magnet retarder in such a way that it makes do with minimal power losses in the unbraked state.

This is achieved in accordance with the invention by the features mentioned in claim 1. Further advantageous embodiments of the rotor are provided in the remaining dependent claims. An advantageous utilization of the rotor according to the invention is described in a permanent magnet retarder according to claim 12. Advantageous further developments thereof can be found in the dependent subclaims.

The solution in accordance with the invention therefore provides that a ring element of the rotor is connected via spokes with a hub region of the circumferential rotor. The spokes are provided at least in their section with a cross-sectional profile, the extension of which in the axial direction of the rotor is considerably smaller than in the circumferential direction of the rotor. The spokes are therefore arranged at least in a partial section of the radial extension with a very flat cross-sectional profile which subdivides the cross-section necessary for carrying the ring element in such a way that it is at most one third smaller in the axial direction of the rotor than in the circumferential direction of the rotor. This leads to spokes or partial sections of the spokes which are arranged as flat elements and thus produce considerably lower air resistance during the rotation of the rotor than this would be the case with spokes with a square or round shape or a differently formed one.

In accordance with the invention the spokes are fixed in a displaceable manner in the radial direction in the region of the ring element or the hub. This linkage with the possibility to be moved in the radial direction over a certain path relative to one another allows a configuration in which the spokes of the rotor permit a certain compensation by the inevitably occurring temperature differences between the ring element and the hub during the braking operation of the permanent magnet retarder and are thus not stressed by thermal tensions or at least only to such an extent as is absolutely necessary.

It is provided in an especially favourable and advantageous further development of the rotor that the expansion in the axial direction is at most two-thirds, preferably at most one-third, of the extension in the circumferential direction of the rotor. The spokes or the partial sections of the spokes in question are therefore arranged in a considerably flattened manner in order to thus cause the lowest possible air resistance.

In an especially preferred further development it can further be provided that the cross-sectional shape of the spokes is free from sections which are disposed perpendicular to the circumferential direction within an angular range of 20° relative to a direction disposed in a plane of the cross-section. The cross-sectional shape of the spokes follows a configuration in the region in question which does not have any sections which extend perpendicularly or at an angle of ± 10 ° against the circumferential direction. This means that all sections extend in such a way that they are disposed at a comparatively small angle in relation to the circumferential direction and thus allow a "streamlined" profile of the respective section of the respective spoke.

In a further very favourable and advantageous embodiment of the rotor it is further provided that the outside circumference of the ring element is provided at least partly with cooling ribs. This configuration of the ring element which is provided with cooling ribs allows emitting heat occurring during the braking process and collecting in the region of the ring element by means of the cooling ribs to the ambient environment, so that no further cooling is necessary by a cooling circuit or the like for example.

It is also provided in an especially favourable and advantageous further embodiment thereof that the cooling ribs are arranged in such a way that the angle enclosed between the cooling ribs and the circumferential direction is smaller than 45°, preferably smaller than 40°. Such an angle of the cooling ribs between the main direction of the cooling ribs and the circumferential direction such that the angle is smaller than 45°, preferably smaller than 40°, means therefore that the cooling ribs are tilted in the direction of the circumferential direction as compared with a conventional angle of 45° or more in relation to the circumferential direction, so that they have a larger component extending in the circumferential direction and thus cause less air resistance during the rotation of the rotor than respective cooling ribs according to the state of the art. The preferred configuration of the cooling ribs can be seen at an angle of approximately 35°, so that the smaller angle enclosed between the cooling ribs and the circumferential direction will amount to such a value of approximately 35°. The angle represents an ideal compromise between the required cooling of the rotor and the air resistance caused by the cooling ribs. In the case of sufficient cooling of the permanent magnet retarder, a reduction of the air resistance caused by the rotor by approximately 50% can be achieved over conventional configurations as a result of this arrangement of the cooling ribs in combination with the shape of the spokes as described above, by means of which the ring element is linked to the hub. This represents a decisive reduction in the power loss.

The rotor in accordance with the invention in one of the aforementioned configurations can be combined in a preferred manner into a permanent magnet retarder with a stator, in the area of which the permanent magnets are arranged. The rotor can then be arranged as a comparatively simple component in such a way that at least the ring element is made of an iron material and thus ensures the generation of a breaking moment in the respective switching state in combination with the permanent magnet arranged in the stator.

In an especially favourable and advantageous further development of the permanent magnet retarder in accordance with the invention it is further provided that it is equipped with more than 20, preferably more than 30, permanent magnets distributed around the circumference of the stator. Such a configuration with a respectively large number of permanent magnets, preferably a number of 32 permanent magnets for example, allows a higher braking moment at the beginning of braking with the same overall size in comparison with the configuration with fewer permanent magnets, or a respectively reduced overall size with the same breaking moment. If one now assumes the same overall size for example and a respectively higher braking moment at the start of the braking process, it will approach the progression of the braking moment of a conventional permanent magnet retarder with half the number of permanent magnet for example as a result of the higher heating after a certain period of time, e.g. a time period of approximately 5 to 10 seconds. Thereupon, over a prolonged period of braking, a respectively lower braking moment will occur that is the case in the permanent magnet retarder provided with fewer magnets. This means in the reverse however that there will be a lower heat development in the region of the permanent magnet retarder as a result of the lower braking moment after the comparatively high subsiding starting moment. This therefore allows a configuration which needs to dissipate a lower quantity of heat as compared with the configuration according to the state of the art. In this way, the angle chosen especially for the cooling ribs can be reduced in the manner as described above. The increase in the number of permanent magnets thus allows a reduction in the produced heat loss, so that the cooling ribs used for heat dissipation can be optimised with respect to the air resistance to such an extent that the occurring heat can barely still be dissipated. This also contributes to the minimisation of the power loss.

As a result of the higher number of permanent magnets, it is also possible to achieve a reduction in the totally employed mass of permanent magnets, because a comparable effect with a few large magnets can be achieved by increasing the number of magnets with respectively smaller magnets. The reduction in the totally employed permanent-magnetic material thus allows a reduction in weight and costs.

Further advantageous embodiments of the configuration in accordance with the invention are disclosed in the remaining dependent claims and will be explained in closer detail by reference to the embodiment which is shown below by reference to the drawings, wherein:
- Fig. 1: shows a three-dimensional view of the permanent retarder in accordance with the invention;
- Fig. 2: shows a sectional view of a top view of the permanent retarder in accordance with the invention;
- Fig. 3: shows the various cross-sectional shapes according to an intersecting plane III - III in Fig. 2, and
- Fig. 4: shows a sectional view of the outside circumference of the rotor in accordance with the invention.

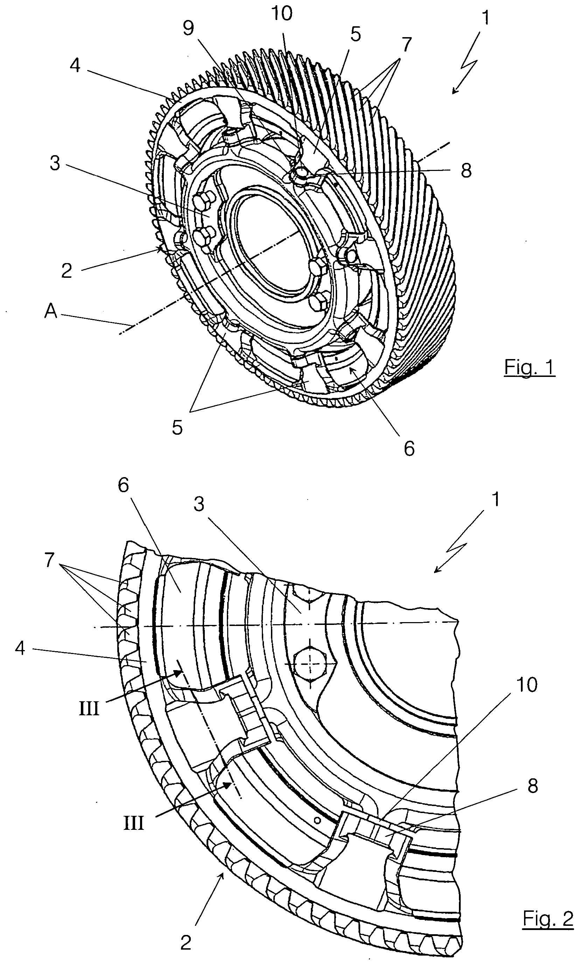

The illustration of Fig. 1 shows a three-dimensional view of a permanent magnet retarder 1, and especially its rotor 2, with the illustration of the bearings and the actuating element for switching from the braking state to the non-braking state being omitted for reasons of simplification of the illustration. The axis A, around which the permanent magnet retarder 1 or the rotor 2 rotates, is indicated in the illustration of Fig. 1. The three-dimensional illustration of Fig. 1 therefore substantially shows the rotor 2 of the permanent magnet retarder 1 which comprises a hub 3 and a ring element 4. Hub 3 and ring element 4 are connected by way of spokes 5, of which only a few are provided with a reference numeral in the illustration of Fig. 1. The ring element 4 of rotor 2 encompasses a stator 6 on its outside circumference, which stator 6 can be recognized between the spokes 5. Permanent magnets and the device for switching between braking operation and non-braking operation of the permanent magnet retarder 1 are arranged in the known manner in the region of stator 6. The rotor 2 and its ring element 4 further comprise cooling ribs 7 on the outside circumference which will be discussed below in closer detail.

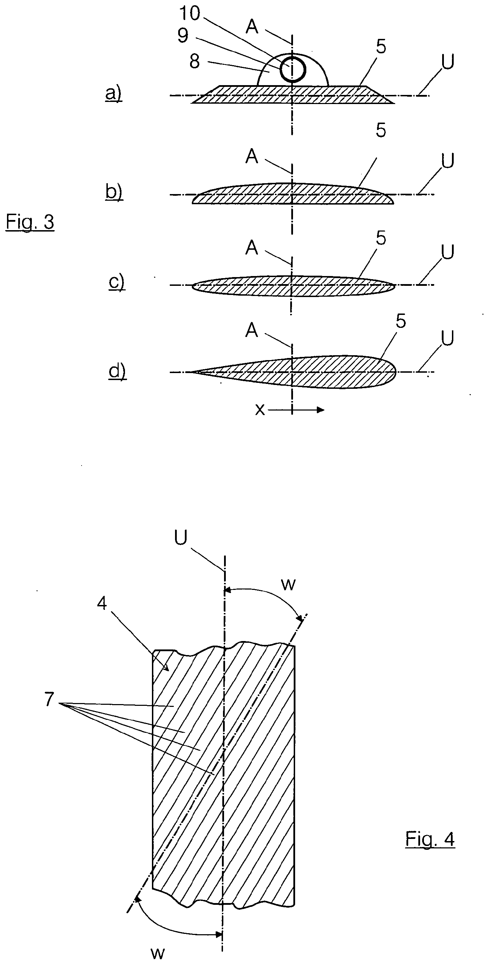

In the sectional view as shown in Fig. 2, the rotor 2 with the hub 3 and two of the spokes 5 and a section of the ring element 4 can be recognized. The stator 6 is shown again between the spokes 5. Cooling ribs 7 are arranged on the outside circumference of the ring element 4. The spokes 5 are connected with the hub 3 in such a way that a movement between each individual spoke 5 is enabled and thus between the ring element 4 and the hub 3 in the radial direction. As is shown in the case of Figs. 1 and 2, this is arranged by way of example in such a way that each of the spokes comprises a flange element 8 at its end facing the hub 3, which flange element carries a receiver, which is provided especially in this case in form of a recess 9 and as is shown in Fig. 3a in closer detail. Said recess can be arranged as a circular hole for example. A component 10, e.g. a pin 10, is connected with the hub 3. The recess 9 and the pin 10 correspond to one another in respect of their shape. If there is a thermal expansion of the ring element 4 which heats up strongly in braking operation, the combination of recess 9 arranged in the flange element 8 and pin 10 connected with hub 3 permits a slight radial movement of the individual spokes relative to the hub. This considerably reduces the thermally induced tension between the relatively cold hub and the relatively hot ring element 4 in braking operation in comparison with a fixed connection in the radial direction. A reverse configuration would principally also be possible, so that the radially movable connection of the spokes 5 is arranged in the region of the ring element 4, i.e. at their other end. It would also be possible to arrange the pin 10 in the region of the spokes 5 and the flange element 8 and the recess 9 in the region of the hub 3. The configuration illustrated here comes with the advantage that typically the ring element 4 and the spokes 5 which are connected with the same will heat up more strongly than the region of hub 3, so that the recess 9 expands as a result of the thermal load and still permits a movement in the radial direction on the comparatively cold pin 10. If one were to connect the pin 10 with the hotter end, jamming of the then very hot pin 10 in the comparatively cold recess 9 could then occur very easily.

The spokes 5 can be welded together with the material of the ring element 4 for example. This represents a simple type of mounting which ensures high stability in combination with good heat conductivity without fastening elements such as screws or rivets increasing the air resistance in the fast-running rotor in their capacity as protruding elements.

Different possibilities for arranging the cross section of spokes 5 are shown in the illustrations of Figs. 3a to 3d in a principal sectional view along line III-III in Fig. 2. The flange 8 with the recess 9 and the pin 10 disposed therein is shown merely in Fig. 3a. The following Figs. 3b to 3d merely show the cross section as such.

The illustration of Figs. 3a to 3d clearly show that the cross section of spoke 5 has a considerably larger expansion in the direction of the circumference U which is shown here as a dot-dash line than the axial direction A for rotor 2 which is disposed in the plane of the drawing and stands perpendicularly thereto. The illustration of Fig. 3a shows in a first example a cross-section which is arranged in an approximately trapezoid manner. In its largest expansion in the circumferential direction it has a much larger expansion in comparison with its expansion in the axial direction A of rotor 2. The ratio is shown here by way of example with approximately 1:8 to 1:10. In particular, the expansion in the axial direction should be two-thirds at most, especially one-third at most, of the expansion in the circumferential direction.

The illustration of Fig. 3b shows a similar cross-section, which has a cross-section instead of the trapezoid cross-section which is provided with a cross-sectional profile which extends continuously between the two endpoints disposed in the circumferential direction. Such a profile can also contribute to the considerable reduction in the air resistance caused by the spoke 5 during the rotation of the rotor 2. The configurations of Figs. 3a and 3b each comprise a linear lateral edge on one of their sides because it revolves comparatively close to stator 6. The case is different in the two possible examples for the arrangement of the cross section spoke 5 in the Figs. 3c and 3d, which are arranged substantially symmetrically to the circumferential line U. The illustration of Fig. 3c shows an elongated oval which tapers accordingly in both directions of its ends disposed in the circumferential direction and thus causes very little swirling and thus very low air resistance. Since the running direction of the rotor is the same over wide operational areas, which is the direction of rotation during forward travel of the vehicle equipped with the permanent magnet retarder 1, it is also possible to arrange the profile in such a way that it has a rounded end for example in a preferred rotational direction in the circumferential direction U and a highly narrowing and tapering end. This is shown in Fig. 3d, with the preferred rotational direction of such a cross-section of the spoke 5 being shown in the direction designated with x of the circumferential direction U.

The configuration of the permanent magnet retarder 1 which is shown here by way of example shall now be chosen in such a way that it comprises permanent magnets in the region of its stator 6 which are arranged in an alternating manner distributed over the circumference. The number shall preferably be over 20, especially in a magnitude of approximately 32 permanent magnets distributed over the circumference. The comparatively high number of permanent magnets allows a comparatively high braking moment at the start of the braking process. It will decrease accordingly over time as a result of thermal processes and a resulting deterioration in the magnetic conductivity, so that a considerably lower retarding moment is obtained after a prolonged braking duration. In comparison with a permanent magnet retarder of the same overall size with fewer magnets, e.g. half as many permanent magnets, the starting braking moment will be higher whereas the retarding moment will be respectively lower. This comparatively low retarding moment in an embodiment with a large number of permanent magnets provides a beneficial effect in the respect that the cooling ribs 7, which are shown again in closer detail in the top view of Fig. 4, need not be set an optimal cooling effect, but that they can be optimised with respect to the air resistance caused by rotor 2 so that the lowest possible air resistance is ensured in combination with sufficient cooling for cooling off the thermal load occurring during the application of the retarding moment.

The illustration of Fig. 4 now shows that the cooling ribs 7 are arranged at an angle w in relation to the circumferential direction which is also designated in this case too with U, so that the angle w which is enclosed by the central axis of the respective cooling ribs 7 and the circumferential direction U is less than 45°, especially less than 40°. In the chosen illustration the angle is approximately 30°, which refers in this case to the respective smaller one of the two angles enclosed between the cooling rib 7 and the circumferential direction U. The cooling ribs 7, which extend in the example from the lower left to the upper right, could also extend on the top left to the bottom right and would enclose the same angle w between the cooling rib 7 and the circumferential direction U, analogously to the above.

This configuration with an angle w which is reduced in comparison with the state of the art between the circumferential direction U and the main alignment of the cooling ribs 7 in combination with a flattened profile of the spokes 5 allows reducing the air resistance caused by rotor 7 during rotation by up to 50% in combination with a comparable overall size and sufficient cooling power. In non-braking operation, the losses caused by the permanent magnet retarder 1 can thus be reduced, so that the drive train which is equipped with the permanent magnet retarder 1 not only becomes more secure with respect to the brakes, but also becomes more efficient in consumption.

## Claims

1. A rotor for a
1.1 permanent magnet retarder (1), comprising several magnets distributed over the circumference of the stator (6) or the rotor (2), the rotor (2) comprising,
1.2 a hub (3), and
1.3 a ring element (4) connected via spokes (5) with the hub (3),
1.4 the spokes (5) are provided with an axially taken cross-sectional profile at least in a section of their radial extension, with the axial extension of said profile being at most two thirds of the extension of said profile in the circumferential direction (U) of the rotor (2), and
1.5 the spokes (5) being fixed in a displaceable manner in the radial direction in the region of the ring element (4) or the hub (3), so that in braking operation, the thermally induced tension between the relatively colb hub (3) and the relatively hot ring element (4) is reduced, in comparison with a fixed connection.

2. A rotor according to claim 1, **characterized in that** the axial extension is at most two thirds, preferably at least one third, of the extension in the circumferential direction (U) of the rotor (2).

3. A rotor according to claim 1 or 2, **characterized in that** the cross-sectional shape of the spokes (5) is arranged to be tapering in the circumferential direction (U) at least at one of the ends.

4. A rotor according to claim 1, 2 or 3, **characterized in that** the cross-sectional shape of the spokes (5) extends in a continuous manner between the two end points disposed in the circumferential direction (U).

5. A rotor according to one of the claims 1 to 4, **characterized in that** the cross-sectional shape of the spokes (5) is free from sections which are disposed perpendicular to the circumferential direction (U) within an angular range of 20° relative to a direction disposed in a plane of the cross section.

6. A rotor according to one of the claims 1 to 5, **characterized in that** each of the spokes (5) has the cross-sectional profile over at least half their radial extension, the extension of which is considerably smaller in the axial direction of the rotor than in the circumferential direction (U) of the rotor (2).

7. A rotor according to one of the claims 1 to 6, **characterized in that** the spokes (5) are welded onto the ring element (4).

8. A rotor according to one of the claims 1 to 7, **characterized in that** at their hub-side end the spokes (5) have a receptacle (9) for a component (10) which corresponds for receiving and is connected with the hub (3), with the receptacle (9) and the corresponding component (10) being arranged to be displaceable against one another in the radial direction.

9. A rotor according to claim 8, **characterized in that** the receptacle is arranged in the region of the spoke (5) as a recess (9) and the component is arranged in the region of the hub (3) as a pin (10).

10. A rotor according to one of the claims 1 to 9, **characterized in that** the outside circumference of the ring element (4) is provided at least partly with cooling ribs (7).

11. A rotor according to claim 10, **characterized in that** the cooling ribs (7) are arranged in such a way that the angle enclosed between the cooling ribs (7) and the circumferential direction (U) is smaller than 45°, preferably smaller than 40°.

12. A permanent magnet retarder, comprising
12.1 a rotor (2) according to one of the claims 1 to 11, and
12.2 a stator (6), in the region of which the permanent magnets are arranged.

13. A permanent magnet retarder according to claim 12, **characterized in that** more than 20, preferably more than 30, permanent magnets are arranged in 5 a distributed manner about the circumference of the stator (6).

14. A permanent magnet retarder according to claim 12 or 13, **characterized in that** the ring element (4) of the rotor (2) encloses the stator (6) on its outside circumference.

## Patentansprüche

1. Rotor für einen
1.1 Permanentmagnetretarder (1), umfassend mehrere über den Umfang des Stators (6) oder des Rotors (2) verteilte Magnete, wobei der Rotor (2) umfasst:
1.2 eine Nabe (3) und
1.3 ein Ringelement (4), das über Speichen (5) mit der Nabe (3) verbunden ist,
1.4 wobei die Speichen (5) zumindest in einem Abschnitt ihrer radialen Erstreckung, in axialer Richtung gesehen, mit einem Querschnittsprofil versehen sind, wobei die axiale Erstreckung dieses Profils höchstens zwei Drittel der Erstreckung dieses Profils in der Umfangsrichtung (U) des Rotors (2) beträgt, und
1.5 die Speichen (5) im Bereich des Ringelements (4) oder der Nabe (3) in radialer Richtung verschiebbar befestigt sind, so dass bei einem Bremsvorgang die thermisch induzierte Spannung zwischen der relativ kalten Nabe (3) und dem relativ warmen Ringelement (4) im Vergleich zu einer feststehenden Verbindung verringert ist.

2. Rotor nach Anspruch 1, **dadurch gekennzeichnet, dass** die axiale Erstreckung höchstens zwei Drittel, vorzugsweise wenigstens ein Drittel, der Erstreckung in der Umfangsrichtung (U) des Rotors (2) beträgt.

3. Rotor nach Anspruch 1 oder 2, **dadurch gekennzeichnet, dass** die Querschnittsform der Speichen (5) so angeordnet ist, dass sie sich an wenigstens einem der Enden in der Umfangsrichtung (U) verjüngt.

4. Rotor nach Anspruch 1, 2 oder 3, **dadurch gekennzeichnet, dass** die Querschnittsform der Speichen (5) sich kontinuierlich zwischen den zwei in der Umfangsrichtung (U) angeordneten Endpunkten erstreckt.

5. Rotor nach einem der Ansprüche 1 bis 4, **dadurch gekennzeichnet, dass** die Querschnittsform der Speichen (5) innerhalb eines Winkelbereichs von 20° relativ zu einer Richtung, die in einer Ebene des Querschnitts angeordnet ist, frei von Abschnitten ist, die senkrecht zur Umfangsrichtung (U) verlaufen.

6. Rotor nach einem der Ansprüche 1 bis 5, **dadurch gekennzeichnet, dass** jede der Speichen (5) das Querschnittsprofil über wenigstens die Hälfte ihrer radialen Erstreckung aufweist, dessen Erstreckung in axialer Richtung des Rotors wesentlich kleiner als in der Umfangsrichtung (U) des Rotors (2) ist.

7. Rotor nach einem der Ansprüche 1 bis 6, **dadurch gekennzeichnet, dass** die Speichen (5) mit dem Ringelement (4) verschweißt sind.

8. Rotor nach einem der Ansprüche 1 bis 7, **dadurch gekennzeichnet, dass** die Speichen (5) an ihrem nabenseitigen Ende eine Aufnahme (9) für eine entsprechende aufzunehmende Komponente (10) aufweisen, die mit der Nabe (3) verbunden ist, wobei die Aufnahme (9) und die entsprechende Komponente (10) so angeordnet sind, dass sie in radialer Richtung gegeneinander verschiebbar sind.

9. Rotor nach Anspruch 8, **dadurch gekennzeichnet, dass** die Aufnahme im Bereich der Speiche (5) als Ausnehmung (9) angeordnet ist und die Komponente im Bereich der Nabe (3) als Stift (10) angeordnet ist.

10. Rotor nach einem der Ansprüche 1 bis 9, **dadurch gekennzeichnet, dass** der Außenumfang des Ringelements (4) wenigstens teilweise mit Kühlrippen (7) versehen ist.

11. Rotor nach Anspruch 10, **dadurch gekennzeichnet, dass** die Kühlrippen (7) so angeordnet sind, dass der zwischen den Kühlrippen (7) und der Umfangsrichtung (U) eingeschlossene Winkel kleiner als 45 °, vorzugsweise kleiner als 40 °, ist.

12. Permanentmagnetretarder, umfassend
12.1 einen Rotor (2) nach einem der Ansprüche 1 bis 11 und
12.2 einen Stator (6), in dessen Bereich die Permanentmagnete angeordnet sind.

13. Permanentmagnetretarder nach Anspruch 12, **dadurch gekennzeichnet, dass** mehr als 20, vorzugsweise mehr als 30, Permanentmagnete um den Umfang des Stators (6) verteilt angeordnet sind.

14. Permanentmagnetretarder nach Anspruch 12 oder 13, **dadurch gekennzeichnet, dass** das Ringelement (4) des Rotors (2) den Stator (6) auf seinem Außenumfang einschließt.

## Revendications

1. Rotor pour un
1.1 retardateur à aimants permanents (1), comprenant plusieurs aimants répartis sur la circonférence du stator (6) ou du rotor (2), le rotor (2) comprenant
1.2 un moyeu (3) et
1.3 un élément annulaire (4) relié par des rayons (5) au moyeu (3),
1.4 les rayons (5) étant munis d'un profil en section axiale au moins dans une partie de leur étendue radiale, l'étendue axiale dudit profil étant au maximum des deux tiers de l'étendue dudit profil dans le sens de la circonférence (U) du rotor (2), et
1.5 les rayons (5) étant fixés de façon à pouvoir être déplacés dans le sens radial dans la région de l'élément annulaire (4) ou du moyeu (3), de sorte que lors d'un freinage, la tension induite thermiquement entre le moyeu (3) relativement froid et l'élément annulaire (4) relativement chaud soit réduite par rapport à une liaison fixe.

2. Rotor selon la revendication 1, **caractérisé en ce que** l'étendue axiale est au moins des deux tiers, de préférence d'un tiers de l'étendue dans le sens de la circonférence (U) du rotor (2).

3. Rotor selon la revendication 1 ou 2, **caractérisé en ce que** la forme en section des rayons (5) est conçue pour diminuer dans le sens de la circonférence (U) à au moins une des extrémités.

4. Rotor selon la revendication 1, 2 ou 3, **caractérisé en ce que** la forme en section des rayons (5) s'étend de façon continue entre deux points terminaux disposés dans le sens de la circonférence (U).

5. Rotor selon l'une des revendications 1 à 4, **caractérisé en ce que** la forme en section des rayons (5) ne comporte pas de sections disposées perpendiculairement au sens de la circonférence (U) dans une plage d'angle de 20° par rapport à une direction passant dans un plan de la section.

6. Rotor selon l'une des revendications 1 à 5, **caractérisé en ce que** chacun des rayons (5) présente le profil en section sur la moitié au moins de son étendue radiale, dont l'étendue est considérablement plus petite dans le sens axial du rotor que dans le sens de la circonférence (U) du rotor (2).

7. Rotor selon l'une des revendications 1 à 6, **caractérisé en ce que** les rayons (5) sont soudés sur l'élément annulaire (4).

8. Rotor selon l'une des revendications 1 à 7, **caractérisé en ce que** les rayons (5) possèdent à leur extrémité côté moyeu un réceptacle (9) pour un composant (10) correspondant pouvant y être reçu et relié avec le moyeu (3), le réceptacle (9) et le composant (10) correspondant étant disposés de façon à pouvoir être déplacés l'un par rapport à l'autre dans le sens radial.

9. Rotor selon la revendication 8, **caractérisé en ce que** le réceptacle est disposé dans une région du rayon (5) sous la forme d'un renfoncement (9) et le composant est disposé dans la région du moyeu (3) sous la forme d'une goupille (10).

10. Rotor selon l'une des revendications 1 à 9, **caractérisé en ce que** la circonférence extérieure de l'élément annulaire (4) est munie au moins en partie d'ailettes de refroidissement (7).

11. Rotor selon la revendication 10, **caractérisé en ce que** les ailettes de refroidissement (7) sont disposées de telle manière que l'angle formé entre les ailettes de refroidissement (7) et le sens de la circonférence (U) soit inférieur à 45°, de préférence inférieur à 40°.

12. Retardateur à aimants permanents, comprenant
12.1 un rotor (2) selon l'une des revendications 1 à 11 et
12.2 un stator (6) dans la région duquel les aimants permanents sont disposés.

13. Retardateur à aimants permanents selon la revendication 12, **caractérisé en ce que** plus de 20, de préférence plus de 30 aimants permanents sont répartis autour de la circonférence du stator (6).

14. Retardateur à aimants permanents selon la revendication 12 ou 13, **caractérisé en ce que** l'élément annulaire (4) du rotor (2) renferme le stator (6) sur sa circonférence extérieure.
